# EUROPEAN PATENT APPLICATION

(11) **EP 3 187 060 A1**
(43) Date of publication of application: **05.07.2017**
(21) Application number: 16187685.9
(22) Date of filing: 07.09.2016
(51) Int. Cl.: A41D 19/015, B60Q 1/26, F21V 33/00, G08B 5/00, G09F 9/33, F21Y 115/10, F21Y 115/15

(54) **A GLOVE FOR SIGNALING CHANGE OF DIRECTION IN TRAFFIC AND METHOD FOR SIGNALLING THE CHANGE OF DIRECTION IN TRAFFIC**

(30) Priority: 07.09.2015 PL 41381215
(71) Applicant: Fbr Sp. z o.o., 99-200 Poddebice (PL)
(72) Inventor: Kowalczyk, Rafa, 99-200 Podd bice (PL)
(74) Representative: Wroblewski, Michal

(57) **Abstract**

The present invention related to a glove (1) for signaling change of direction in traffic using lighting elements (11) in the form of LEDs or OLED lighting area and a method of signaling change of direction in the traffic.

## Description

A glove for signaling change of direction in traffic, method for signaling the change of direction in traffic, and method for teaching the electronic circuit how to activate its light.

The present invention relates to a glove which allows for signaling changes of direction in traffic, method for signaling the changes of direction in traffic by means of light signal and method for teaching the electronic circuit how to activate its light.

In prior art there are multiple solutions which include turn signal gloves.

The patent application GB2441295 describes a glove containing a light module with at least one LED and a battery power supply mounted in a common casing on the external surface of the glove. The ON / OFF switch is mounted on the side of the glove's index finger and is activated with the thumb. Similar solutions are found in patents GB2310788 and GB2316429.

In the patent GB2274156 the contacts which activate the LED light module are in the form of two little metal eyes mounted on the thumb and index finger.

Patent DE0240971 describes a glove containing a lighting device powered with a battery mounted in a closed casing. The contacts which activate light are riveted to the fabric of the glove on the thumb and the index finger. The light comes on when they are connected with one another. The battery is mounted in the wrist part and, together with LED and the activation contacts they form one circuit.

The company GTC introduced to the market gloves with turn signals placed on the front and the back of the index finger which are activated by pressing a button.

In gloves made by Google Zach Vorhies with a built-in lighting system LEDs are activated when the index finger makes contact with the thumb which is the natural position of the hand during bike riding. They are powered with small batteries which makes wearing the bike turn signal gloves almost unnoticeable. The light signal is active for as long as the index finger and the thumb remain in contact.

The patent application GB2310788A describes gloves in which the switch contact is placed on the thumb. Simultaneously, there are two circuit closing wires connected to the thumb. When the thumb touches the index finger, these wires make contact, which causes the circuit to close and the installed lighting element produces light.

Patent KR1020070102833A describes gloves with LEDs mounted on their outer surface. The batteries which power them are placed in the casing on the inner side and have a feeder that runs to the contact mounted on the inner, bottom side of the glove.

According to the present invention, the glove for signaling change of direction in traffic is equipped with fiber-optic indicator and at least one lighting element. Fiber optic, preferably made from silicon is equipped with a reflective screen which contains an encapsulated electronic circuit. The lighting elements are in form of LEDs which give out reflected light. The indicator is placed on the outer side of the glove, preferably in a pocket. The reflective element is placed on the bottom side of the glove. The electronic circuit based on a microcontroller, gyroscope or accelerometer is powered by a battery or an accumulator placed in an integrated grip in a cover cap which is embedded in the indicator.

The bottom side of the glove near the thumb area contains the area with the reflective element which is visible for the vehicles approaching from the front.

In an alternative solution, the lighting elements is in the form of OLED lighting area on an elastic surface powered with a battery and / or photovoltaic cells.

Activating the turn signal is done by turning the hand in the axis of the forearm or in the axis perpendicular to the wrist. Any other movements will not activate the circuit.

This method is the result of teaching the electronic circuit how to trigger the light effect. The teaching process is as follows: once the glove has been put on and the battery has been placed in the integrated grip in the cover cap, turning hand motions are made in the axis of the forearm or in the axis perpendicular to the wrist until the lighting circuit begins producing light in the form of an intermittent signal. After a few seconds the light goes off and comes back on at the moment the person wearing the glove according to the invention begins making identical turning hand motions.

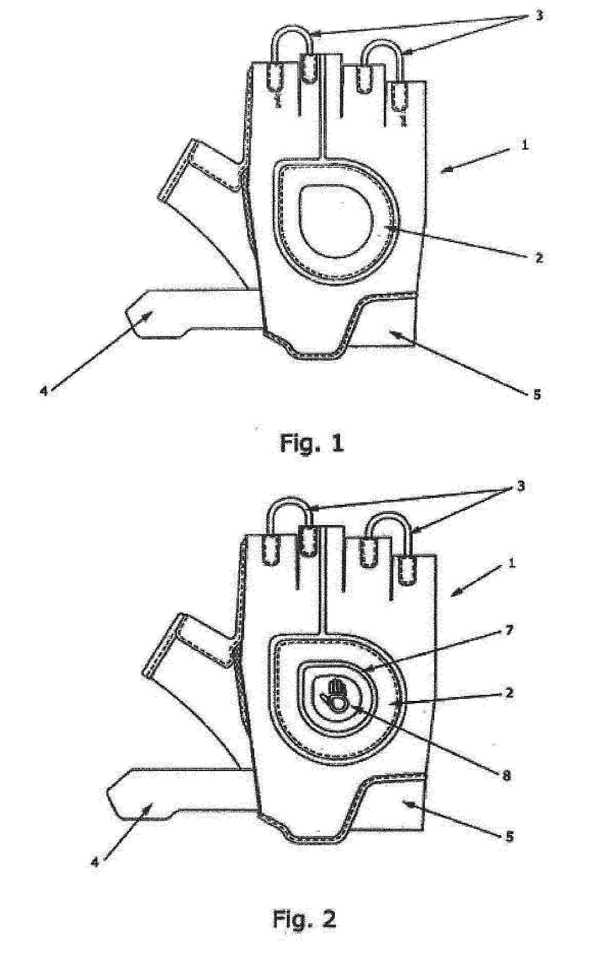

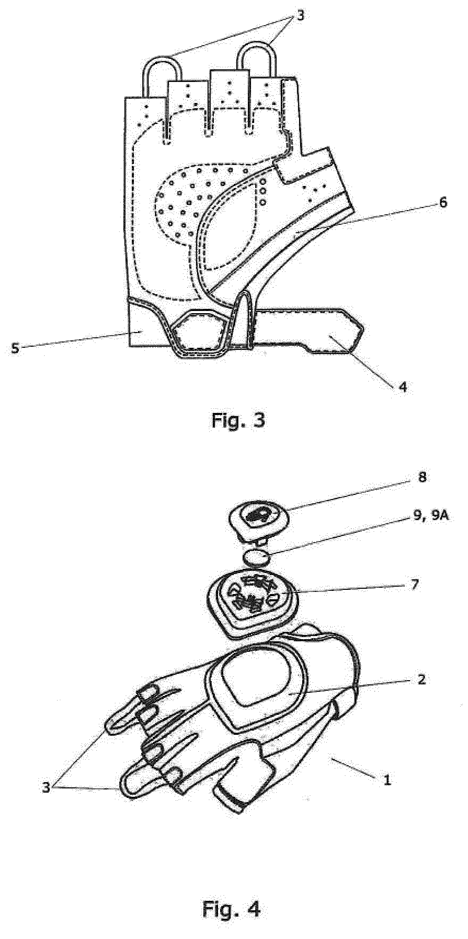

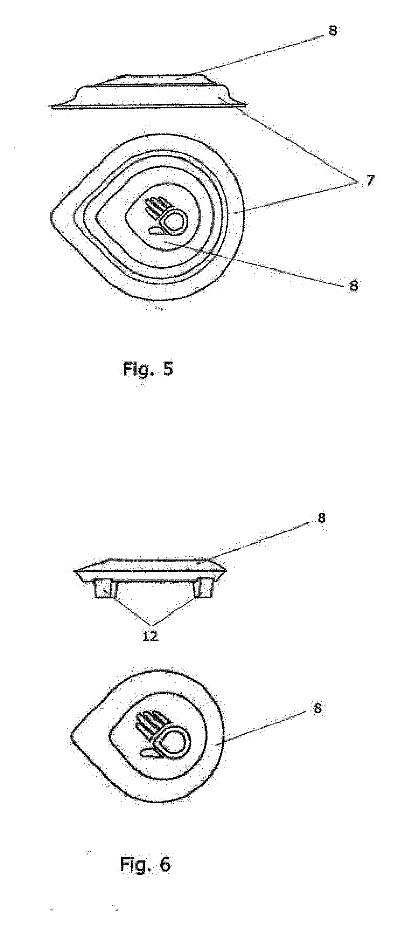

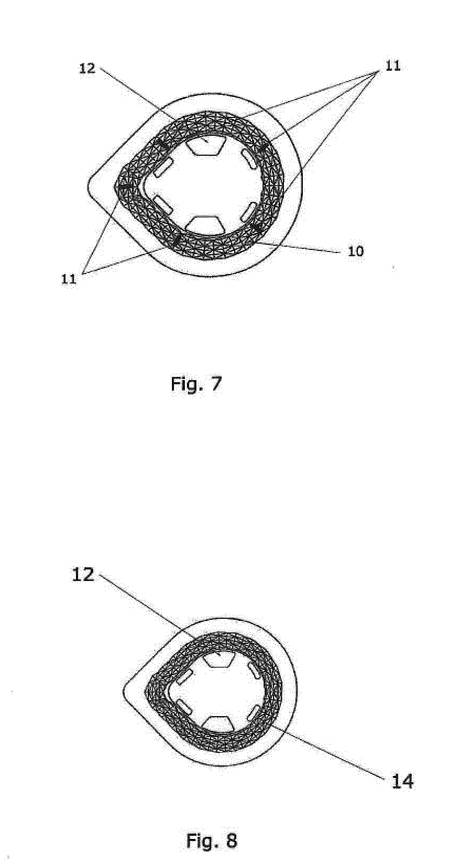

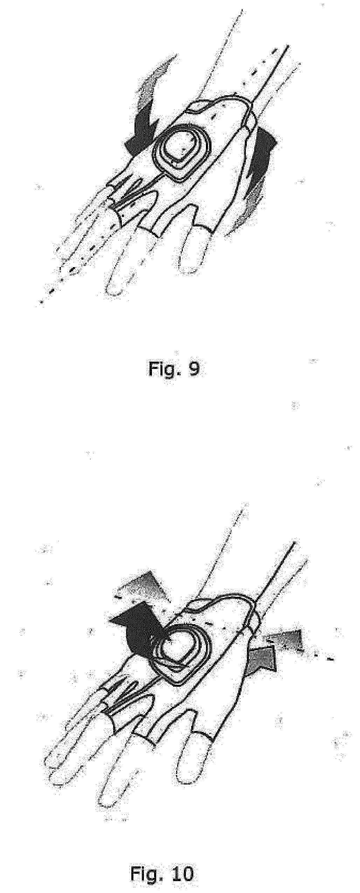

The invention is illustrated in they embodiments where fig. 1 shows the outer side of the glove without the indicator, fig. 2 - the outer surface of the glove with the indicator, fig. 3 - the bottom side of the glove, fig. 4 - the upper perspective view of the glove components, fig. 5 - the view from the top and the side of the indicator and its components, fig. 6 - the view from the top and the side of the battery cap, fig. 7 - the bottom view of the indicator with LEDs, fig. 8 - the bottom view of the indicator with the OLED lighting area, fig. 9 - the perspective view of the glove showing the activation method of the lighting element by a turning hand motion in the axis of the forearm, fig. 10 - the perspective view of the glove showing the method to activate the lighting element by a turning hand motion in the axis perpendicular to the wrist.

Example 1. The glove 1 is put on the hand and fastened with Velcro straps 4 and 5. Removal of the glove 1 is made easier by the elements 3 mounted to its finger part 3. The indicator 7 of changing the direction in traffic, powered with a battery 9 or an accumulator 9A placed in the integrated grip inside the cover cap 8, is situated on the outer side of the glove 1 in the pocket 2. The cap 8 is embedded inside the indicator 7 with mounting elements 12. The Indicator 7 is a silicon fiber optic equipped with a reflective screen 10 which contains an encapsulated electronic circuit with LEDs 11. The electronic circuit is based on a microcontroller, gyroscope or accelerometer.

On its bottom side, in the thumb and wrist part the glove 1 has an area containing a reflective element 6 which is visible for road users approaching from the front.

Example 2. The glove 1 is put on the hand and fastened with Velcro straps 4 and 5. Removal of the glove 1 is made easier by the elements 3 mounted to its finger part 3.The indicator 7 of changing the direction in traffic, powered with a battery 9 or an accumulator 9A placed in the integrated grip inside the cover cap 8, is situated on the outer side of the glove 1 in the pocket 2.The cap 8 is embedded inside the indicator 7 with mounting elements 12.The indicator 7 is a silicon fiber optic equipped with a reflective screen 10 which contains an encapsulated electronic circuit with OLED lighting area 14 powered with batter 9 and / or photovoltaic cells. The electronic circuit based on a microcontroller, gyroscope or accelerometer. On its bottom side, in the thumb and wrist part the glove 1 has an area containing a reflective element 6 which is visible for road users approaching from the front.

When riding a bike or any other transportation device (electric bike, motor scooter, scooter, etc.), doing skate sports (roller blading, skateboarding, roller skiing) or running / walking (recreational running, long distance running, walking, Nordic walking) the person wearing the gloves, according to the invention, can signal the change of direction in traffic by extending the hand (left or right depending on the direction of the turn) in such a way that road users approaching from behind could see the outer side of the hand where the indicator is placed, while road users approaching from the front could see the reflective element sewn on at the thumb from the inner side. The lighting on the light indicator is activated through the turn of the hand in the axis of the forearm or in the axis perpendicular to the wrist. The activated indicator begins to blink for a few seconds (similarly to a car blinker). After a few seconds the blinking is self-deactivated.

For persons moving on foot whose both hands are free there is a way to signal the change of direction to vehicles approaching from the front by showing the outer side of the right hand positioned according to the direction of the turn and switching on the indicator in the way described above.

## Claims

1. A glove for signaling change of direction in traffic with a lighting element **characterized in that** it contains a fiber optic indicator (7) with at least one lighting element (11).

2. A glove according to claim 1, **characterized in that** the indicator (7) is in the form of a fiber optic equipped with a reflective screen (10) which contains an encapsulated electronic circuit.

3. A glove according to claim 1 or 2, **characterized in that** the indicator (7) is in the form of a silicon fiber optic equipped with a reflective screen (10) which contains an encapsulated electronic circuit.

4. A glove according to claim 1, **characterized in that** the lighting element (11) is an LED.

5. A glove according to claim 1, **characterized in that** the lighting element (11) is an OLED lighting area.

6. A glove according to claim 1, **characterized in that** the indicator (7) is placed on the outer side of the glove (1).

7. A glove according to claim 1 or 6, **characterized in that** the indicator (7) is placed inside a pocket (2).

8. A glove according to claim 1, **characterized in that** it contains a reflective element (6) mounted on the bottom side of the glove (1).

9. A glove according to claim 1, **characterized in that** the electronic circuit is powered by a battery (9) placed in an integrated grip in a cover cap (8) which is embedded in the indicator (7).

10. A glove according to claim 1, **characterized in that** the electronic circuit is powered by an accumulator (9A) placed in an integrated grip in a cover cap (8) which is embedded in the indicator (7).

11. A glove according to claim 1, **characterized in that** the electronic circuit is based on a microcontroller, gyroscope or accelerometer

12. A method for signaling the change of direction in traffic, **characterized in that** the light signal is activated by turning hand motions.

13. A method according to claim 12, **characterized in that** activation of light signals is done by making hand motions in the axis of the forearm.

14. A method according to claim 12, **characterized in that** activation of light signals is done by making hand motions in the axis perpendicular to the wrist.

15. A method for teaching the electronic circuit how to activate its light, **characterized in that** after putting the glove on and placing the battery (9) in the integrated grip in the cover cap (8), hand turns are made in the axis of the forearm or in the axis perpendicular to the wrist until the fighting circuit begins to produce an intermittent light that lasts for a few seconds.
